## Europäisches Patentamt
## European Patent Office
## Office européen des brevets

(19)

(11) Numéro de publication: **0 041 193**
**A1**

## (12) DEMANDE DE BREVET EUROPEEN

(21) Numéro de dépôt: **81103930.4**

(22) Date de dépôt: **22.05.81**

(51) Int. Cl.³: **H 04 Q 9/00**
**H 04 B 3/54**

(30) Priorité: **29.05.80 FR 8011898**

(43) Date de publication de la demande:
**09.12.81 Bulletin 81/49**

(84) Etats contractants désignés:
**AT BE CH DE FR GB IT LI LU NL SE**

(71) Demandeur: **SAFT - SOCIETE DES ACCUMULATEURS FIXES ET DE TRACTION S.A. dite:**
**156, avenue de Metz**
**F-93230 Romainville(FR)**

(72) Inventeur: **Dieterlen, Dominique**
**82, rue de la Tombe Issoire**
**F-75014 Paris(FR)**

(74) Mandataire: **Weinmiller, Jürgen et al,**
**Zeppelinstrasse 63**
**D-8000 München 80(DE)**

(54) **Système de transmission d'informations.**

(57) L'invention se rapporte à un système de transmission entre des stations secondaires et une station centrale par l'intermédiaire des fils d'un réseau apte à transmettre des signaux électriques..

Le système comporte un générateur de signaux de synchronisation (10) connecté au réseau (3), un générateur de signaux d'appel (11) également relié au réseau (3), un agencement d'activation (8) de générateur d'informations (6) dans chaque station secondaire (1) pour activer ce générateur à détection d'un nombre de signaux de synchronisation spécifique de la station postérieurement à la détection d'un signal d'appel, et un agencement de réception (12) que est associé à la station centrale (2) et qui mémorise les informations fournies par les stations secondaires en succession.

L'invention se rapport à la transmission d'informations par des réseaux autres que les réseaux spécialisés de télécommunications.

FIG.1

EP 0 041 193 A1

## Système de transmission d'informations

La présente invention concerne les systèmes de transmission d'informations dans lesquels des stations géographiquement dispersées communiquent avec une station centrale par l'intermédiaire d'un réseau apte à transmettre des signaux électriques.

Il est déjà bien connu de faire communiquer des stations géographiquement dispersées par l'intermédiaire de liaisons spécialisées de transmission de l'information, telles que des liaisons téléphoniques, lorsque l'on veut acheminer des informations de l'une à l'autre ou de chacune à une station centrale.

Il existe cependant un certain nombre de cas où d'autres solutions doivent être envisagées pour des raisons économiques et pratiques.

En effet, on peut penser à utiliser d'autres moyens que les liaisons spécialisées de transmission, à partir du moment où d'une part ces liaisons sont à créer ou à prolonger et où d'autre part les besoins à satisfaire ne justifient pas nécessairement à eux seuls cette création ou ce prolongement.

Ainsi par exemple, on peut envisager d'utiliser un réseau de distribution d'énergie électrique pour transmettre des informations provenant d'appareils connectés où aisément connectables à ce réseau.

Ceci permet d'éviter de créer un réseau spécialisé de transmission pour desservir ces appareils et en particulier de passer des câbles de transmission en plus des indispensables câbles d'énergie. Bien entendu une telle solution n'est pas destinée à remplacer les réseaux de transmission spécialisés dont les performances permettent de répondre à d'autres besoins que ceux auxquels la présente invention vise à répondre.

En ce but il est donc proposé et un système de transmission d'information dans lequel des stations secondaires géographiquement dispersées communiquent avec une station centrale par l'intermédiaire de fils d'un réseau électrique auquel ces stations sont connectées via des transmetteurs individuels.

Selon l'invention, ce système comporte un générateur de signaux de synchronisation, connecté au réseau, un générateur de signaux d'appel relié au réseau via un transmetteur, des agencements d'activation respectivement situés dans chaque station secondaire et respectivement reliés au réseau par autant de transmetteurs, ainsi qu'un agencement de réception associé à la station centrale et relié lui aussi au réseau via un transmetteur. Chaque agencement d'activation est essentiellement composé d'un détecteur de signaux d'appel, et d'un identificateur apte à activer un générateur d'information, relié au transmetteur de la station ; cette activation a lieu après comptage d'un nombre prédéterminé de signaux de synchronisation postérieurement à la détection d'un signal d'appel. L'agencement de réception est essentiellement composé d'un récepteur de signaux de synchronisation, déclenchable par les signaux d'appel et d'un collecteur d'informations apte à mémoriser individuellement les signaux électriques d'information émis par chaque station activée, en vue de les transmettre à un centre de traitement.

D'autres caractéristiques et avantages de la présente invention seront décrits au cours de la description suivante et en relation avec les figures répertoriées ci-dessous.

La figure 1 présente un schéma synoptique du système selon l'invention.

La figure 2 présente un schéma d'une station secondaire du système présenté figure 1.

La figure 3 présente un schéma d'une station centrale du même système.

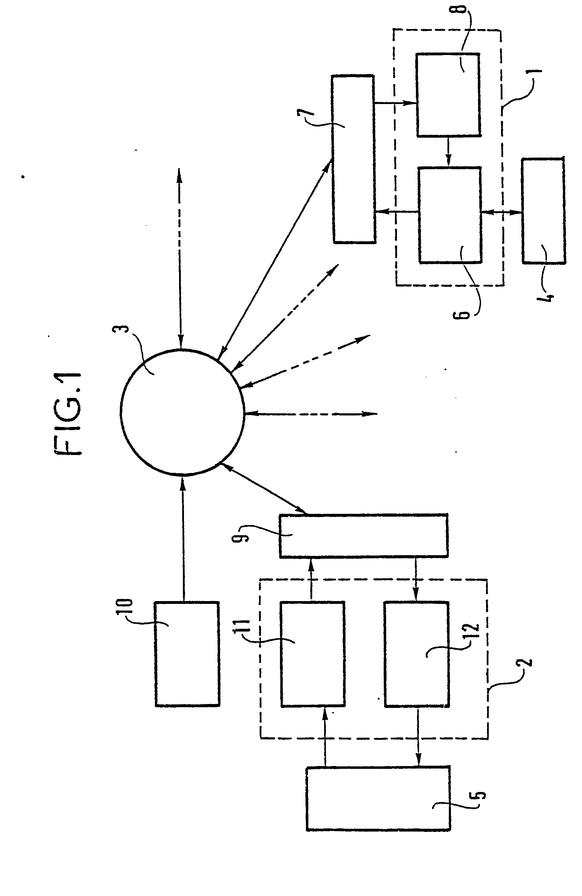

Le système présenté à la figure 1 est destiné à faire communiquer des stations secondaires géographiquement dispersées, telles que la station secondaire 1, avec une station principale 2. Cette mise en communication peut s'effectuer par différents moyens en particulier par des signaux électriques. Ces signaux sont transmis par des liaisons filaires symbolisées par un réseau 3 sur la figure 1.

Les stations secondaires 1 desservent des équipements de saisie 4 du type compteur de mesure de consommation d'énergie thermique et la station centrale 2 dessert un centre de traitement 5 assurant la gestion des informations recueillies pour les besoins de l'organisation qui distribue l'énergie.

La station centrale 2 émet des signaux d'appel qui sont reçus par les stations secondaires 1 et qui déclenchent l'émission d'une information par chaque station secondaire 1 après une durée déterminée caractéristique de cette station 1. Chaque durée déterminée est établie par comptage d'un nombre déterminé de signaux d'horloge dans chaque station, à partir de chaque signal d'appel, les diverses stations secondaires 1 se définissant chacune par un nombre particulier.

Pour assurer ceci, chaque station secondaire 1 comporte un générateur d'informations 6, chargé de conformer les informations reçues de l'équipement de saisie 4 qu'elle dessert, et un transmetteur 7. Dans l'exemple présenté ce transmetteur 7 est bidirectionnel et il permet aussi la réception des informations transmises via le réseau à destination de la station secondaire 1 qu'il dessert.

Chaque station secondaire 1 comporte aussi un agencement d'activation 8 qui est apte à détecter les signaux d'appel et à mesurer une durée caractéristique de cette station 1, suite à la détection d'un signal d'appel de manière à activer le générateur d'informations 6 de la station au moyen d'un signal d'autorisation individuelle d'émission.

La mesure de la durée caractéristique s'effectue par comptage de signaux d'horloge à partir du signal d'appel. Ces signaux d'horloge peuvent être produits soit à partir d'horloges internes à chaque station qui ont même fréquence et qui sont déclenchées par le signal d'appel, soit à partir d'un signal de synchronisation communiqué à toutes les stations.

Dans l'exemple présenté figure 1, un générateur de signaux de synchronisation 10 émet des signaux de manière préférablement permanente et un générateur d'appel 11 émet un signal d'appel soit sur demande expresse du centre de traitement 5, soit de manière cyclique sur action d'une horloge ainsi qu'il sera montré plus loin.

Ni le centre de traitement 5 ni les équipements de saisie 4 ne seront décrits ici, car ce sont des équipements classiques qui ne font pas partie de l'invention proprement dite.

Le générateur d'appel 11 est relié à un transmetteur 9 qui dessert aussi un agencement de réception 12 destiné à collecter les informations émises par les stations secondaires 1.

Le générateur de signaux de synchronisation est un générateur de signaux sinusoïdaux présentant une bonne stabilité dans le temps.

Dans une variante de réalisation dans lequel le réseau 3 est un réseau filaire de distribution d'énergie électrique, le générateur de signaux d'appel 10 est l'horloge pilote du réseau de distribution et sa fréquence est donc celle du réseau soit classiquement 50Hz ou 60Hz.

Dans ce cas, au moins une partie du fils du réseau de distribution est utilisée comme moyen de transmission entre stations en plus de son utilisation habituelle de distribution d'énergie.

Les stations sont alors préférablement situées à proximité des points de distribution du réseau ou encore connectées à ce réseau pour des raisons relatives à la distribution d'énergie.

Le générateur de signaux d'appel 11 est un classique générateur de signaux sinusoïdaux dont la fréquence est supérieure à celle du générateur de signaux de synchronisation 10, ces signaux d'appel sinusoïdaux sont convenablement amplifiés et envoyés au transmetteur 9 pendant un intervalle de temps de longueur déterminée, par exemple 160 millisecondes à chaque fois qu'une transmission d'informations est demandée aux stations secondaires 2.

Le signal sinusoïdal ainsi émis est transmis aux stations secondaires via le transmetteur 9, les fils du réseau 3 et les transmetteurs 7.

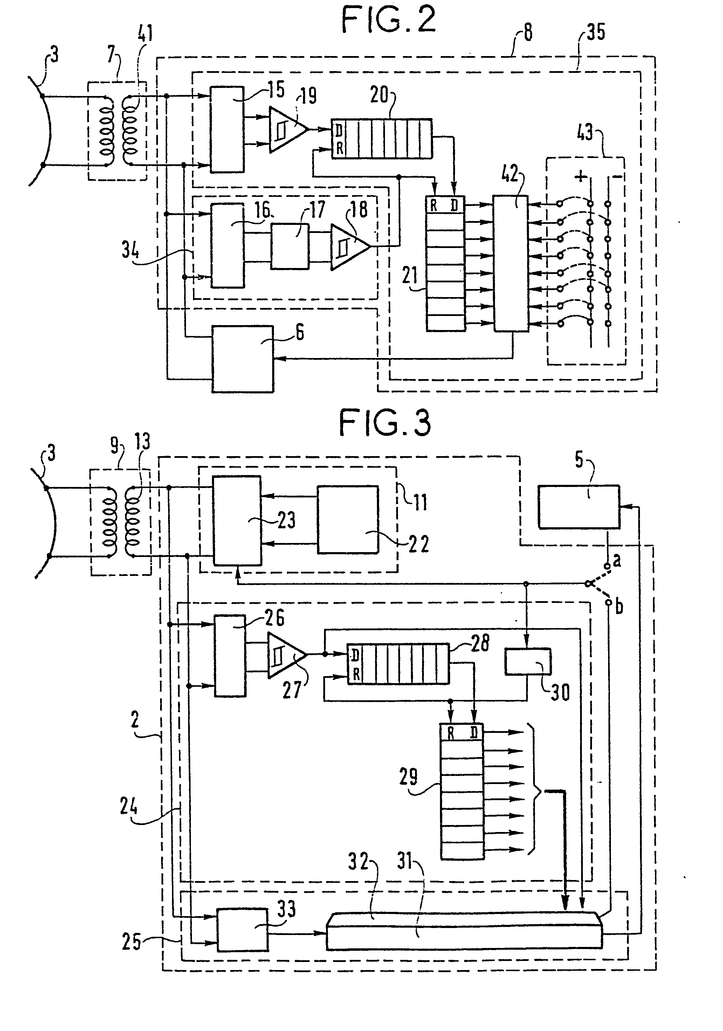

Dans l'exemple de réalisation présenté figures 2 et 3, les transmetteurs 7 et 9 sont réalisés à l'aide de transformateurs de couplage qui assurent à la fois la transmission bidirectionnelle des signaux et l'isolement galvanique.

La station secondaire 1 présentée à la figure 2 est reliée aux bornes de l'enroulement 41 non relié au réseau 3 du transmetteur 7. Cette station secondaire 1 comporte un générateur d'informations 6 et un agencement d'activation 8 connectés en parallèle aux bornes de l'enroulement 41.

Le générateur d'informations 6 est un classique générateur de signaux sinusoïdaux, dont les fréquences sont situées au-dessus des fréquences des signaux de synchronisation et d'appel, par exemple dans la gamme supraphonique, ces signaux sont modulés en fréquence ou en phase ou en durée, en fonction des informations de type binaire reçues de l'équipement de saisie 4.

L'agencement d'activation 8 comporte un détecteur de signaux d'appel 34 et un identificateur 35.

L'entrée de cet agencement d'activation 8 comporte un filtre passe-bas 15 et un filtre à bande étroite 16 qui sont connectés en parallèle aux bornes de l'enroulement 41 de même que le générateur d'informations 6.

Le filtre à bande étroite 16 qui sert d'entrée au détecteur de signaux d'appel 34 est un filtre de type classique qui est centré par construction sur la fréquence du signal d'appel, il est relié par sa sortie à l'entrée d'un circuit redresseur intégrateur 17 à diodes, résistances et capacités de type connu. Le circuit 17 transforme le signal sinusoïdal qu'il reçoit du filtre à bande étroite 16 en un signal de type binaire apte à déclencher une bascule bistable 18.

Le filtre passe-bas 15 qui sert d'entrée à l'identificateur 35 est un filtre classique conçu pour éliminer toutes les fréquences supérieures à une fréquence déterminée et en particulier les fréquences d'appel et d'information.

La sortie du filtre passe-bas 15 est reliée à une bascule bistable 19 de comptage qui bascule toutes les demi-périodes et qui alimente un diviseur binaire de précomptage 20. Le diviseur 20 est constitué par un circuit de type compteur dont le nombre d'étages détermine la durée de transmission des informations qui est égale au produit du nombre d'étages du diviseur de précomptage 20 par la durée de la période du signal de synchronisation.

Le diviseur de précomptage 20 alimente un compteur binaire 21 dont le nombre d'étages n est en relation avec le nombre $2^n$ de stations secondaires 1 que le système de transmission selon l'invention peut désservir.

Un comparateur 42 est relié aux sorties individuelles d'étage du compteur 21 par un premier groupe d'entrées, il est aussi relié par un second groupe d'entrées aux sorties d'une mémoire passive de mémorisation 43 qui contient un nombre binaire correspondant au numéro d'identification de la station secondaire 1 concernée, chaque station secondaire 1 ayant un numéro d'identification choisi parmi les $2^n$ possibilités offertes.

La logique passive de mémorisation 43 a pour but de positionner au niveau un les entrées secondaires du comparateur 42 qui correspondent aux éléments binaires de valeur un du numéro d'identification de la station codé en binaire, et au niveau zéro les autres entrées secondaires. Ceci peut être obtenu par différents moyens reliant sélectivement les entrées secondaires du comparateur aux potentiels correspondants aux valeurs binaires zéro ou un et en particulier à l'aide de cavaliers de connexion, ou d'un câblage, ou d'une mémoire dont seule la lecture est autorisée.

La sortie du comparateur 43 est reliée à une entrée d'activation du générateur d'informations 6, et elle permet la mise en émission de ce générateur lorsque le nombre affiché par le compteur 21 est égal au nombre affiché par la logique passive de mémorisation 42.

Cette activation est maintenue pour une durée fixée par le diviseur de précomptage 20 ainsi qu'il a été expliqué précédemment.

Les signaux électriques que produit le générateur d'informations 6, sont émis sur le réseau 3 via le transmetteur 7 et ils sont reçus par la station centrale 2 à travers le transmetteur 9, à partir du moment où certaines précautions connues sont prises dans le choix du niveau du signal émis et des fréquences retenues en fonction des liaisons empruntées et de la distance entre stations.

La station centrale 2, telle que présentée figure 4, comporte un agencement de réception 12 auquel est associé le générateur de signaux d'appel 11 évoqué plus haut.

Un même transmetteur 9 dessert l'agencement de réception 12 et le générateur de signaux d'appel 11, ce transmetteur 9 est également un transformateur, il a même rôle que celui qui constitue le transmetteur 7.

Le générateur de signaux d'appel 11 est composé d'un classique oscillateur 22 et d'un amplificateur 23 qui est relié au réseau via le transmetteur 9 et qui comporte une entrée d'activation permettant de contrôler l'émission des signaux d'appel.

L'agencement de réception 12 comporte un récepteur de signaux de synchronisation 24 et un collecteur d'informations 25.

Le récepteur de signaux de synchronisation 24 a une constitution très voisine de celle de l'agencement d'identification 8, l'un et l'autre comportent en effet un filtre passe-bas dont l'entrée est reliée à un transmetteur et dont la sortie est reliée à une bascule de comptage qui dessert un compteur via un diviseur de précomptage.

Le récepteur de signaux de synchronisation 24 comporte en conséquence un filtre passe-bas 26 identique au filtre 15, une bascule 27 identique à la bascule 19, un diviseur de précomptage 28 identique au diviseur 20 et un compteur de signaux de synchronisation 29 identique au compteur 21, de telle sorte que les compteurs 29 et 21 soient pratiquement synchrones.

En ce but le compteur 29 reçoit une indication d'appel, soit via un dispositif non figuré identique à l'ensemble filtre à bande étroite 16, circuit redresseur-intégrateur 17, bascule 18, soit directement de l'organe de commande du générateur de signaux d'appel 11.

Dans l'exemple présenté figure 3, c'est cette dernière solution qui est représentée sous forme de deux variantes "a" et "b".

Dans la variante "a" le centre de traitement 5 émet un ordre de lancement d'appel à destination de l'amplificateur 23, cet ordre de type binaire est également transmis aux entrées de remise à zéro R du diviseur de précomptage 28 et du compteur 29 via une bascule monostable de temporisation 30.

Dans la variante "b" un décodeur 32 assure cycliquement l'envoi de l'ordre de lancement d'appel et cet ordre est transmis via la bascule monostable de temporisation 30 qui inhibe le diviseur de précomptage 28 et par conséquent le compteur 29 pour une durée suffisante pour permettre la remise à zéro des compteurs 21 et des diviseurs de précomptage 20 des stations secondaires.

Le compteur 29 est relié au décodeur 32 qui permet d'adresser les lignes d'une mémoire 31 du collecteur d'informations 25.

Cette mémoire 31 comporte un nombre de cases de mémoire multiple de $2^n$ de manière à pouvoir enregistrer les informations émises par les $2^n$ stations secondaires 1 susceptibles d'être desservies par le système de transmission selon l'invention. Les informations émises par les stations secondaires sont reçues sous forme de signaux sinusoïdaux par le collecteur d'information 25 qui comporte en ce but un convertisseur 33, qui permet de convertir les informations reçues en signaux de type binaire en vue de leur transmission à la mémoire 31. La mise en mémoire 31 et la transmission des informations de la mémoire 31 au centre de traitement 5 peuvent exiger des manipulations de signaux binaires et en particulier des conversions série-parallèle avec des synchronisations spécifiques, ceci ne sera toutefois pas décrit plus avant dans la mesure où cela est bien connu et n'entre pas directement dans le cadre de l'invention.

Le système selon l'invention permet de répartir simplement dans le temps l'émission de stations secondaires telles que 1 et d'identifier simplement, au niveau d'une station centrale telle que 2, les stations émettrices d'informations reçues par cette station centrale, puisque :

- le signal d'appel émis par le générateur 11 signale à toutes les stations le début d'un cycle d'adressage destiné à activer successivement chaque station secondaire en émission,

- le comptage des signaux de synchronisation par chaque station à partir de la fin du signal d'appel permet aux stations secondaires d'identifier l'intervalle de temps qui leur est attribué pour émission et permet à la station centrale d'associer les signaux successivement reçus aux stations successivement émettrices en vue de les mémoriser temporairement avant traitement.

REVENDICATIONS

1/ Système de transmission d'informations dans lequel des stations secondaires (1) géographiquement dispersées communiquent avec une station centrale (2) par l'intermédiaire de fils d'un réseau (3), apte à transmettre des signaux électriques, ce système étant caractérisé en ce qu'il comporte :

- un générateur de signaux de synchronisation (10), connecté au réseau (3),

- un générateur de signaux d'appel (11) relié au réseau via un transmetteur (9),

- un agencement d'activation (8), dans chaque station secondaire (1), relié au réseau (3) via un transmetteur (7) et essentiellement composé d'un détecteur de signaux d'appel (34), et d'un identificateur (35) apte à activer un générateur d'information (6) propre à la station secondaire (1) et relié au réseau (3) via le transmetteur (7), après détection d'un nombre prédéterminé de signaux de synchronisation postérieurement à la détection d'un signal d'appel,

- un agencement de réception (12), associé à la station centrale (2), relié au réseau (3) via un transmetteur (9) et essentiellement composé d'un récepteur de signaux de synchronisation (24) déclenchable par les signaux d'appel et d'un collecteur d'informations (25) apte à mémoriser les signaux d'informations émis par chaque station secondaire (1) en vue de les transmettre à un centre de traitement (5).

2/ Système de transmission d'informations selon la revendication 1, caractérisé en ce que l'identificateur (43) de chaque station secondaire (1) comporte :

- un compteur de signaux de synchronisation (21) à étages, relié au transmetteur (7) de la station et à la sortie du détecteur de signaux d'appel (34) de cette station,

- une logique passive (43) de mémorisation du nombre binaire prédéterminé d'identification de la station (1),

- un comparateur de détection de coïncidences (42) relié par un premier groupe d'entrées aux sorties individuelles ───────────➤

des étages du compteur (21), par un second groupe d'entrées aux sorties correspondantes de la logique passive de mémorisation (43) et par sa sortie à une entrée d'activation du générateur d'informations (6) de la station (1).

3/ Système de transmission selon les revendications 1 et 2, caractérisé en ce que les générateurs de signaux d'appel (11), de synchronisation (10) et d'informations (6) sont des générateurs de signaux sinusoïdaux de fréquences différentes, en ce que le détecteur de signaux d'appel (34) de chaque station (1) est relié au transmetteur (7) de cette station via un filtre à bande étroite (16) centré sur la fréquence des signaux d'appel et en ce que le compteur de signaux de synchronisation (21) est relié au transmetteur de la station (7) via un filtre passe-bas (15) dont la fréquence de coupure est inférieur aux fréquences des signaux d'appel et des informations, ces deux filtres étant reliés en parallèle au transmetteur (7) qui les dessert.

4/ Système de transmission selon la revendication 3, caractérisé en ce que le détecteur de signaux d'appel (34) d'une station (1) comporte un circuit de redressement et d'intégration (17), relié par son entrée à la sortie du filtre à bande étroite (16) et par sa sortie à une bascule bistable (18) de remise à zéro du compteur (21).

5/ Système de transmission selon la revendication 4, caractérisé en ce que le compteur de signaux de synchronisation (21) a son entrée de données reliée à la sortie du filtre passe-bas (15) par l'intermédiaire d'une bascule de comptage (19) et d'un diviseur de précomptage (20) montés en série, et en ce que le compteur de signaux de synchronisation (21) et le diviseur de précomptage (20) ont leurs entrées de remise à zéro respectives reliées à la sortie du détecteur de signaux d'appel (34).

6/ Système de transmission selon la revendication 3, caractérisé en ce que le compteur de signaux de synchronisation (29) de la station centrale (2) est relié au transmetteur (9) du générateur de signaux d'appel (11) en parallèle sur ce générateur (11) et via un filtre passe-bas (26), une bascule de comptage (27) et un diviseur de précomptage (28) qui sont identiques aux filtres passe-bas (15), aux bascules de comptage (19) et aux diviseurs de précomptage (20) des stations secondaires (1) de même que lui-même est identique aux compteurs de signaux de synchronisation (21) de ces stations.

7/ Système de transmission selon la revendication 6, caractérisé en ce que le générateur de signaux d'appel (11) comporte une entrée d'activation qui est reliée aux entrées de remise à zéro du compteur de signaux de synchronisation (29) et du diviseur de précomptage (28) de la station centrale (2) via un circuit de temporisation (30).

8/ Système de transmission selon la revendication 7, caractérisé en ce que le collecteur d'informations (25) comporte :

- un convertisseur (33) de signaux alternatifs d'information en signaux binaires, qui est relié au transmetteur (9) de la station centrale (2) en parallèle avec le générateur de signaux d'appel (11),

- une mémoire d'information (31) connectée en sortie du convertisseur (33) pour l'entrée des données et à un décodeur (32) par ses entrées d'adressage, le décodeur (32) étant lui même relié par ses entrées aux sorties d'étage du compteur de signaux de synchronisation (29) de la station centrale (2).

9/ Système de transmission selon la revendication 6, caractérisé en ce que les compteurs de signaux de synchronisation (21 et 29) comportent respectivement un même nombre d'étages fonction du nombre de stations secondaires (1) à desservir et en ce que les diviseurs de précomptage (20 et 28) comportent respectivement un même nombre d'étages fonction de la période d'émission attribuée à chaque station secondaire (1).

FIG.1

# FIG.2

# FIG.3

Office européen  
des brevets

**RAPPORT DE RECHERCHE EUROPEENNE**

EP 81 10 3930

| Catégorie | Citation du document avec indication, en cas de besoin, des parties pertinentes | Revendication concernée |
|---|---|---|
| | <u>CH - A - 541 845</u> (AUTOPHON)  <br> * Colonne 3, lignes 23-68; figures 1,2 * | 1 |
| | <u>DE - A - 2 154 696</u> (ROBERT BOSCH ELEKTRONIK)  <br> * Revendication 1; figure 1 * | 1 |
| | <u>FR - A - 2 135 950</u> (NISSAN MOTOR CO.)  <br> * Page 3, ligne 23 - page 6, ligne 28; figures 1-3 * | 1 |
| A | <u>US - A - 4 114 141</u> (TRAVIS)  <br> * Revendications 1,2,4 * | 1 |

### DOCUMENTS CONSIDERES COMME PERTINENTS

**CLASSEMENT DE LA DEMANDE (Int. Cl.³)**

H 04 Q 9/00  
H 04 B 3/54

**DOMAINES TECHNIQUES RECHERCHES (Int. Cl.³)**

H 04 B 3/54  
H 04 Q 9/00  
         9/04  
H 02 J 13/00  
G 08 C 15/12

**CATEGORIE DES DOCUMENTS CITES**

X: particulièrement pertinent  
A: arrière-plan technologique  
O: divulgation non-écrite  
P: document intercalaire  
T: théorie ou principe à la base de l'invention  
E: demande faisant interférence  
D: document cité dans la demande  
L: document cité pour d'autres raisons  

&: membre de la même famille, document correspondant

Le présent rapport de recherche a été établi pour toutes les revendications

| Lieu de la recherche | Date d'achèvement de la recherche | Examinateur |
|---|---|---|
| La Haye | 01-09-1981 | WANZEELE |

OEB Form 1503.1   06.78